# EUROPÄISCHE PATENTSCHRIFT

(11) **EP 4 491 410 B1**
(45) Veröffentlichungstag und Bekanntmachung des Hinweises auf die Patenterteilung: **22.04.2026**
(21) Anmeldenummer: 24188278.6
(22) Anmeldetag: 12.07.2024
(51) Int. Cl.: B42D 25/29, B42D 25/373, C09D 5/14, C09D 11/037

(54) **KATALYTISCH BESCHLEUNIGTE FARBTROCKNUNG AUF EINEM WERTDOKUMENT**
CATALYTICALLY ACCELERATED COLOR DRYING ON A VALUABLE DOCUMENT
SÉCHAGE DE PEINTURE ACCÉLÉRÉ PAR CATALYSE SUR UN DOCUMENT DE VALEUR

(30) Priorität: 13.07.2023 DE 102023118566
(43) Veröffentlichungstag der Anmeldung: 15.01.2025
(73) Patentinhaber: Giesecke+Devrient Currency Technology GmbH, 81677 München (DE)
(72) Erfinder: Böhm, Michael, 83703 Gmund am Tegernsee (DE); Dr. Seidler, Rudolf, 83703 Gmund am Tegernsee (DE); Kost, Jonas, 81677 München (DE)
(74) Vertreter: LKGLOBAL Partnerschaftsgesellschaft mbB

(56) Entgegenhaltungen:
- EP-A1- 2 634 309
- EP-A1- 3 825 440
- EP-A1- 3 949 736
- WO-A1-2021/197663

## Beschreibung

### Technisches Gebiet

Die vorliegende Erfindung betrifft die katalytisch beschleunigte Farbtrocknung auf einem Wertdokument, wie beispielsweise einer Banknote oder einem Ausweisdokument. Somit betrifft die vorliegende Erfindung ein Wertdokument, umfassend ein Substrat mit optional zwei gegenüberliegend aufgebrachten Schichten, mindestens eine Bedruckung aus mindestens einer Druckfarbe, und optional mindestens eine weitere Schicht, wobei mindestens eine der mindestens einen Druckfarbe Silber-Ruthenium-Bimetallpartikel enthält. Weiterhin betrifft die vorliegende Erfindung ein Verfahren zur katalytisch beschleunigten Aushärtung einer Druckfarbe auf einem Wertdokument, umfassend die Schritte des Bereitstellens einer Druckfarbe, die Silber-Ruthenium-Bimetallpartikel enthält, und Drucken der Druckfarbe auf ein Wertdokumentensubstrat, sowie die Verwendung von Silber-Ruthenium-Bimetallpartikeln zur Aushärtung von Druckfarben auf einem Wertdokument.

### Technischer Hintergrund

Bei der Herstellung von Wertdokumenten, wie beispielsweise Banknoten, erfolgt der Druckvorgang in der Regel in mehreren Druckschritten, wobei vielfältige aufeinanderfolgende Druck- und Veredelungsverfahren zum Einsatz kommen können. Einer der ersten Schritte ist hierbei in der Regel ein einfarbiger oder mehrfarbiger Untergrunddruck im Offset- und/ oder Letterset- Verfahren.

Die hierfür verwendete Druckausstattung kann stark variieren und ist von den folgenden Parametern abhängig:
- den verwendeten Sicherheitsfarben bzw. Sicherheitspigmente;
- der Art des verwendeten (Papier-)Substrats (z.B. Substrate auf Basis von Baumwollfasern; auf Mischfasern beruhende Substrate, wobei Mischfasern insbesondere Baumwolle, Flachs, Leinen, Zellstoffe und Kunstfasern sind; Substrate auf Basis von Kunststofffolien; imprägnierte und vorbeschichtete Substrate);
- der Bereitstellung von zu bedruckenden Substraten, die einen inhomogenen Aufbau aufweisen (z.B. Papiersubstraten, die mit einem Folienelement versehen sind; teilweise vorbedruckten Substraten; Substraten mit auf Siebdruckbasis partiell aufgebrachten, flächigen Elementen);
- der Bereitstellung von zu bedruckenden Substraten, die an verschiedenen Stellen einen unterschiedlichen pH-Wert und/ oder eine unterschiedliche Papierfeuchte aufweisen, wobei hierbei auch unterschiedlich raue und poröse Oberflächen einen Einfluss haben.

Während Produktionsfehler, die zu einer sichtbaren Verschlechterung des Druckergebnisses führen, bereits an der Druckmaschine entdeckt und ausgeglichen werden können (z.B. die Farbführung), besteht bei sich auf die Substrattrocknung und/ oder die Substratabmessungen auswirkenden Produktionsfehlern die Gefahr, dass diese den weiteren Produktionsprozess stark verzögern und zudem die Makulaturmenge erhöhen. Die für die Bedruckung notwendigen unterschiedlichen Druckausstattungen haben zudem einen starken Einfluss auf das Verhalten der Druckbögen in den weiteren Druckschritten. Druckschritte, die Wärme zuführen, führen zu Substratschrumpfungen. Bei Druckschriften, die unter hohem mechanischem Druck erfolgen, zeigen sich Dimensionsveränderungen (insbesondere Dimensionsvergrößerungen) am Substrat. Vor allem der im Wertpapier- und Sicherheitsdruck weitverbreitete Stichtiefdruck belastet Substrat und Farbschichten in besonderer Weise, sodass eine ausreichende Trocknung essentiell ist.

Wenn die Dimensionsveränderungen am Substrat bestimmte Toleranzgrenzen überschreiten, bleibt oft nur der Neudruck mit einer veränderten Druckausstattung. Alternativ kann die Druckausstattung der nachfolgenden Druckschritte angepasst werden, was mit hohem Aufwand und hohen Kosten verbunden ist.

Die mangelnde Trocknung eines bedruckten Substrats infolge einer problematischen Farbrezeptur oder infolge eines nicht wegschlagenden Substrats lässt sich zum Teil durch die Zufuhr von Wärme beschleunigen. Allerdings führt die Erwärmung von Druckerzeugnissen häufig zu einer schlecht kontrollierbaren Veränderung der Abmessungen des bedruckten Substrats. Dies ist insbesondere bei Zellulose-, Baumwoll- und weiteren Papiersubstraten der Fall, bei denen der Wärmeeintrag zu Feuchtigkeitsverlust führt. Als Folge kann der Passer bei den nachfolgenden Druckschriften oft nicht eingehalten werden. Auch bei der Verwendung von Kunststoffsubstraten oder hybriden Substraten (z.B. mehrlagige Folie/ Papier/ Folie-Substrate, wie sie aus WO 2004/ 028825 A2 bekannt sind) tritt der Effekt auf. Ein weiterer Nachteil besteht darin, dass sich das Ablegen von Druckfarbe innerhalb eines Stapels von Wertdokumenten auf diese Weise nicht wesentlich verbessern lässt. Das Ablegen von Druckfarbe bezeichnet hierin die Erscheinung, dass sich die noch nasse Druckfarbe am nächsten Druckbogen abbildet und dort das Druckergebnis stört.

Die Trocknung eines bedruckten Substrats lässt sich des Weiteren durch den Zusatz von metallhaltigen Trockenstoffen beschleunigen. Oxidativ trocknende Druckfarben (d.h. Druckfarben, die nicht zu den UV-Farben oder UV- Lacken gehören) enthalten üblicherweise einen Trockenstoff bzw. Sikkativ. Trockenstoffe sind insbesondere organische Salze bestimmter Metalle wie Cobalt (z.B. Cobaltoctoat, Cobaltnaphthenat), Mangan, Calcium (z.B. Calciumoctoat), Zirkonium oder Cer. Metallhaltige Trockenstoffe entfalten in Anwesenheit von Sauerstoff ihre Wirkung durch Beschleunigung des Zerfalls von *in situ* gebildeten Peroxiden. Unter der Voraussetzung, dass Lagerung und Transport weitgehend unter Luftabschluss erfolgen, kann ein Trockenstoff bereits ab Werk in die Farbe eingearbeitet werden. Allerdings beschleunigen diese Art von Trockenstoffen wie schon erwähnt lediglich den Zerfall von in situ gebildeten Peroxiden, erzeugen jedoch nicht eine erhöhte Konzentration von Peroxiden. Zudem sollte die Verwendung der oben genannten (Schwer-) metallhaltigen Trockenstoffe aus Gründen der Arbeitssicherheit und Umweltschutzgründen so weit wie möglich vermieden werden.

Die Trocknung eines bedruckten Substrats lässt sich darüber hinaus durch den Zusatz von peroxidhaltigen Stoffen, wie etwa anorganischen oder organischen Peroxiden, beschleunigen. Diese setzen beim Zerfallen radikalischen Sauerstoff frei und beschleunigen so die oxidative Trocknung der Farbschicht. Dies funktioniert auch an Stellen, an denen Luft- bzw. Sauerstoffmangel herrscht, folglich auch bei nicht wegschlagenden Substraten und in hohen bzw. großflächigen Wertdokument-Stapeln. Von Nachteil ist allerdings, dass peroxidhaltige Stoffe der Farbe erst verhältnismäßig kurz vor dem Druck hinzugefügt werden dürfen, weil die Farbe durch die mit dem Hinzufügen des Peroxids einsetzende chemische Reaktion nicht über einen längeren Zeitraum gelagert werden kann.

Die Trocknung eines bedruckten Substrats lässt sich darüber hinaus durch den Einsatz von UVtrocknenden Untergrundfarben oder hybriden UV- Systemen anstelle von oxidativ trocknenden Systemen beschleunigen. Solche Farben sind allerdings deutlich teurer, besitzen häufig sensibilisierende Eigenschaften und weisen unter Umständen eine schlechte Überdruckbarkeit auf. Zudem besitzen sie als Fertigfarbe nur eine begrenzte Haltbarkeit. Ähnliches gilt auch für neuartige hybride Farbformulierungen, die sowohl konventionelle, oxidativ trocknende Farbbestandteile, als auch UV-härtende Farbbestandteile enthalten. Nicht zuletzt benötigen solche Farben eine Bestrahlung mit UV- Strahlung, was einen zusätzlichen Arbeitsschritt im Druckverfahren unter Verwendung spezieller Ausrüstung sowie eines gewissen (zusätzlichen) Energieeinsatzes darstellt, was aus ökonomischen Gründen allerdings nachteilig sein kann. Ebenfalls kann eine UV-Bestrahlung nur auf einzelne Bögen angewendet werden, nicht jedoch auf Stapel von Bögen. Ein neuartiges Verfahren zur Farbtrocknung unter Verwendung von UV-Strahlung und Photosensibilisatoren zur Erzeugung von Singulettsauerstoff, das einige der oben genannten Nachteile überkommt, wird beispielsweise in der WO 2021/197663 A1 beschrieben, wobei z.B. Photosensibilisatoren wie in der WO 2017/032892 A beschrieben verwendet werden können. Allerdings hat sich in diesem Verfahren neben der an sich nachteiligen Notwendigkeit eines Schritts der Bestrahlung mit UV-Strahlung zusätzlich die in der Praxis notwendige Dauer der UV-Bestrahlung als den Druckprozess verzögernd herausgestellt.

Dokument WO 2011/197663 A1 offenbart ein Wertdokumentsubstrat mit zwei gegenüber liegenden Hauptflächen, wobei zumindest eine der beiden Hauptflächen einen Photosensibilisator zur Erzeugung von Singulettsauerstoff aufweist.

Der vorliegenden Erfindung liegt somit die Aufgabe zugrunde, Wertdokumente mit verbesserten Farbtrocknungseigenschaften im Druckprozess verglichen mit dem Stand der Technik bereitzustellen. Beispielsweise wäre es wünschenswert, wenn die Wertdokumente nach dem Druck bei Lagerung im Stapel noch weiter aushärten würden und zudem die Stapelhöhe hinreichend hoch sein könnte, beispielsweise mindestens 300 Bögen oder bevorzugt mindestens 500 Bögen. Außerdem wäre es wünschenswert, wenn zusätzliche Schritte im Druckverfahren, wie beispielsweise eine Bestrahlung mit UV-Strahlung, vermieden oder zumindest so kurz wie möglich gehalten werden könnten. Die vorliegende Erfindung wie hierin beschrieben sowie in den unabhängigen Ansprüchen definiert löst diese Aufgabe. Die abhängigen Ansprüche stellen bevorzugte Ausführungsformen dar.

### Zusammenfassung

Die vorliegende Erfindung betrifft gemäß einem ersten Aspekt ein Wertdokument, umfassend ein Substrat mit optional zwei darauf gegenüberliegend aufgebrachten Schichten, mindestens eine Bedruckung aus mindestens einer Druckfarbe, und optional mindestens eine weitere Schicht, wobei mindestens eine der mindestens einen Druckfarbe Silber-Ruthenium-Bimetallpartikel enthält.

Die vorliegende Erfindung betrifft weiterhin gemäß einem zweiten Aspekt ein Verfahren zur katalytisch beschleunigten Aushärtung einer Druckfarbe auf einem Wertdokument, umfassend die Schritte des Bereitstellens einer Druckfarbe, die Silber-Ruthenium-Bimetallpartikel enthält, und Drucken der Druckfarbe auf ein Wertdokumentensubstrat.

Die vorliegende Erfindung betrifft weiterhin gemäß einem dritten Aspekt die Verwendung von Silber-Ruthenium-Bimetallpartikeln zur Aushärtung von Druckfarben auf einem Wertdokument. Ausführliche Beschreibung der Erfindung

Die vorliegende Erfindung beruht auf der Erkenntnis, dass in einer Druckfarbe, insbesondere einer im Bereich des Wertdokumentendrucks verwendeten Druckfarbe, enthaltene Silber-Ruthenium-Bimetallpartikel in der Lage sind, die Farbtrocknung katalytisch zu beschleunigen. Dabei wird zur Farbtrocknung keine UV-Bestrahlung benötigt, sondern lediglich die Anwesenheit von Sauerstoff, da durch die Silber-Ruthenium-Bimetallpartikel Sauerstoff in Anwesenheit von zwei Protonen katalytisch zu Wasserstoffperoxid umgesetzt wird. Dies geschieht durch einen komplexen Mechanismus, über den die durch katalytische Oxidation von organischer Materie mit Silber erzeugten Elektronen über eine Redoxkaskade umfassend Ruthenium auf Sauerstoff unter Bildung von Wasserstoffperoxid übertragen werden. Dieser Prozess wird durch Umgebungsfeuchtigkeit unterstützt. Das an sich instabile Wasserstoffperoxid zerfällt in einem weiteren Schritt in zwei Hydroxyradikale, die die oxidative Trocknung der Druckfarbe beschleunigen. Dies erfolgt in der Regel durch eine oxidative Vernetzung der in der Druckfarbe enthaltenen Polymerbestandteile. Dabei ist die Reaktion besonders schnell an der Oberfläche der Druckfarbe, die in Kontakt mit Luftsauerstoff steht und somit einer hohen Sauerstoffkonzentration ausgesetzt ist. Dies ist vorteilhaft, da eine an der Oberfläche schnell abgeschlossene oder zumindest bereits weitgehend abgeschlossene Trocknung ein zeitnahes Übereinanderlegen von Druckbögen ermöglicht, ohne dass ein Verschmieren der Druckfarbe und/oder eine Abgabe von noch nasser Druckfarbe von einem Druckbogen auf einen anderen befürchtet werden muss. Gleichzeitig unterstützten die Silber-Ruthenium-Bimetallpartikel unter Verwendung von in die Druckfarbe diffundierten Sauerstoff aber auch die langsamer ablaufende Tiefentrocknung. Es ist somit möglich die Druckbögen bereits kurz nach dem Druckprozess in großer Anzahl, insbesondere in einer Anzahl von mehr als 500 Druckbögen oder sogar mehr als 1000 Druckbögen, wie in der Praxis im Wertdokumentendruck üblicherweise gemacht, zu einem Wertdokumentenstapel zum vollständigen Trocknen übereinander zu legen.

Somit richtet sich die vorliegende Erfindung gemäß einem ersten Aspekt auf ein Wertdokument, umfassend ein Substrat mit optional zwei darauf gegenüberliegend aufgebrachten Schichten, optional mindestens eine weitere Schicht, und mindestens eine Bedruckung aus mindestens einer Druckfarbe, wobei mindestens eine der mindestens einen Druckfarbe Silber-Ruthenium-Bimetallpartikel enthält.

Das Wertdokument kann jede Art von Wertdokument sein, beispielsweise ein Sicherheitspapier, eine Banknote oder ein Ausweisdokument, und ist bevorzugt eine Banknote oder ein Ausweisdokument und besonders bevorzugt eine Banknote.

Das Wertdokument umfasst ein Substrat mit optional zwei darauf gegenüberliegend aufgebrachten Schichten. Jedes für Wertdokumente geeignete Substrat kann verwendet werden. Diese Substrate sind dem Fachmann bekannt und umfassen beispielsweise Papiersubstrate, Substrate auf Basis von Baumwollfasern oder von Mischfasern, wobei Mischfasern insbesondere Fasern aus Baumwolle, Flachs, Leinen, Zellstoffe und Kunststoff umfassen können, Substrate auf Basis von Kunststofffolien, imprägnierte und vorbeschichtete Substrate. Auch hybride Substrate können verwendet werden, wie beispielsweise Papier-Kunststoffsubstrate oder mehrlagige Substrate, beispielsweise Folie/ Papier/ Folie-Substrate, wie sie aus WO 2004/ 028825 A2 bekannt sind. Das Substrat kann mit Polymeren aller Art imprägniert sein, und ist bevorzugt mit Polyvinylalkohol imprägniert.

Auf dem Substrat befinden sich optional zwei darauf gegenüberliegend aufgebrachten Schichten. In einer bevorzugten Ausführungsform umfasst das erfindungsgemäße Wertdokument ein Substrat mit zwei zumindest teilweise, insbesondere vollständig, darauf gegenüberliegend aufgebrachten Schichten.

Die auf dem Substrat gegenüberliegend aufgebrachten Schichten sollen in der Regel das Substrat schützen, beispielsweise durch Schmutz- und/oder Feuchtigkeitsabweisung. Sie können aber auch alternativ oder zusätzlich einen Untergrund mit verbesserter Haftung für weitere Schichten, beispielsweise eine Druckschicht, bereitstellen. Die auf dem Substrat gegenüberliegend aufgebrachten Schichten können dementsprechend beispielsweise Leimungsschichten und/oder Primerschichten sein. Potentielle Leimungsschichten sowie Primerschichten und Verfahren zu deren Auftragung sind dem Fachmann bekannt. Eine Leimungsschicht und/oder Primerschicht kann beispielsweise durch eine physikalisch trocknende Lackschicht gebildet werden. "Physikalisch trocknend" bedeutet, dass die Trocknung durch Verdunsten und/ oder Wegschlagen der Lösungsmittel bzw. Dispersionsmittel in das Substrat erfolgt. Die Herstellung geeigneter Beschichtungen wird beispielsweise in der EP 2634309 A1 und der WO 2004/ 072378 A1 beschrieben. Besonders bevorzugt sind Dispersionslacke auf Wasserbasis. Beispielsweise kann eine Leimungsschicht Polyvinylalkohol und/oder Polyurethan enthalten. Beispiele für geeignete Primerzusammensetzungen sind Zusammensetzungen auf der Basis von Acrylaten, Polyesteracrylaten, Urethanacrylaten, Polyesterpolyurethanen und Acryl- Styrol-Polyurethanen. Wasserbasierte Dispersionen, insbesondere wasserbasierte Dispersionen aliphatischer Komponenten, sind besonders bevorzugt.

Des Weiteren können alle hierin beschriebenen Beschichtungszusammensetzungen unabhängig voneinander die üblichen Hilfsstoffe, wie beispielsweise Koaleszenzmittel, Verlaufmittel, Netzmittel, Entschäumungsmittel, Viskositätsmodifizierungsmittel, Dispergierhilfsmittel, Verdünnungsmittel und Vernetzungsmittel, enthalten. Auch bevorzugt visuell nicht erkennbare Merkmalsstoffe, wie beispielsweise Lumineszenzstoffe, können in den Zusammensetzungen enthalten sein.

Das erfindungsmäße Wertdokument umfasst weiterhin mindestens eine Bedruckung aus mindestens einer Druckfarbe, bevorzugt aus mehreren Druckfarben. Eine Bedruckung kann dabei sowohl eine vollflächig oder zumindest teilweise flächig auf dem Wertdokument aufgebrachte Druckschicht aus einer Druckfarbe oder Druckfarbenmischung als auch alternativ ein durch Auftragung einer bestimmten Druckfarbe erhaltenes Druckmuster sein. Eine Bedruckung kann selbstverständlich auch mehrere Druckmuster aus verschiedenen Druckfarben, die neben- oder (teilweise) übereinander aufgebracht sind, enthalten. Ebenso kann neben mindestens einem Druckmuster aus einer Druckfarbe auch zusätzlich eine vollflächig oder zumindest teilweise flächig auf dem Wertdokument aufgebrachte Druckschicht vorhanden sein. Eine Bedruckung aus mehr als einer Druckfarbe ist bevorzugt. Die Bedruckung kann beispielsweise ein Untergrunddruck oder ein Stichtiefdruck sein und kann beispielsweise direkt auf dem Substrat aufgebracht sein oder auf mindestens einer, bevorzugt beiden, der zwei auf dem Substrat optional gegenüberliegend aufgebrachten Schichten oder auf etwaigen weiteren Schichten des Wertdokuments.

Es ist erfindungsgemäß weiterhin erforderlich, dass mindestens eine der mindestens einen Druckfarbe auf dem Wertdokument Silber-Ruthenium-Bimetallpartikel enthält. Bevorzugt enthält mehr als eine Druckfarbe Silber-Ruthenium-Bimetallpartikel. Beispielsweise können alle oder zumindest die Mehrzahl aller zur Bedruckung des erfindungsgemäßem Wertdokuments verwendeten Druckfarben Silber-Ruthenium-Bimetallpartikel enthalten.

Zusätzlich zur mindestens einen Druckfarbe kann bevorzugt auch das Substrat und/oder, wenn vorhanden, mindestens eine der beiden gegenüberliegend aufgebrachten Schichten, und/oder, wenn vorhanden, mindestens eine der mindestens einen weiteren Schicht Silber-Ruthenium-Bimetallpartikel enthalten. Da Wasserstoffperoxid und Hydroxyradikale auch in der Lage sind, in gewissen Maßen durch die verschiedenen Schichten und somit auch in die Druckfarbe zu diffundieren, können im Substrat und/oder in mindestens einer der beiden gegenüberliegend aufgebrachten Schichten und/oder in mindestens einer der mindestens einen weiteren Schicht gebildete Wasserstoffperoxidmoleküle und/oder gebildete Hydroxyradikale den Trocknungsprozess der Druckfarbe unterstützen. Dies ist besonders hilfreich, um den Tiefentrocknungsprozess zu unterstützen.

Die Silber-Ruthenium-Bimetallpartikel sind dadurch gekennzeichnet, dass sie Silber und Ruthenium enthalten, wobei das Silber und das Ruthenium bevorzugt im elektrisch leitenden Kontakt stehen, um eine optimale katalytische Wirkung zu entfalten. Die Bimetallpartikel können vollständig aus Silber und Ruthenium bestehen und somit ein Kompakt- oder Vollmaterial darstellen. Nano- und Mikrometer große Metallpartikel können beispielsweise durch Mahl-, elektrochemische, chemisch reduktive, Kapillar-Elektrophorese-, Hydrothermal-Synthese-, PVD-, CVD- oder Sol-Gel-Verfahren hergestellt werden.

Es ist jedoch aus Kostengründen bevorzugt, dass die Bimetallpartikel nur auf ihrer Oberfläche eine Schicht aus Silber und Ruthenium aufweisen, die auf einem Trägermaterial im Inneren der Bimetallpartikel aufgebracht ist. Dies reicht für die katalytische Aktivität völlig aus und reduziert den Bedarf an Silber und Ruthenium für die Bimetallpartikel erheblich. Als potentielles Trägermaterial kommen alle denkbaren Materialien in Betracht, beispielsweise andere Metalle; deren Oxide oder anderen Derivate, Metalllegierungen, Halbmetalle und deren Verbindungen, Nichtmetalle und deren Verbindungen, Kunststoffe, Keramiken oder Gläser. Bevorzugt ist das Trägermaterial ein Aluminiumoxid, beispielsweise Böhmit, Siliziumdioxid, Zirkoniumdioxid, Titandioxid, Stahl, Kohlenstoff, oder Zellulose. Je nach Größe der Bimetallpartikel sowie Art des Trägermaterial nimmt das Trägermaterial den Großteil des Gesamtgewichts der Bimetallpartikel ein. Beispielsweise kann in den Bimetallpartikeln der Anteil an Trägermaterial mehr als 50 Gew.-%, mehr als 70 Gew.-%, mehr als 80 Gew.-%, mehr als 90 Gew.-%, mehr als 95 Gew.-%, mehr als 98 Gew.-% oder sogar mehr als 99 Gew.-%, betragen. Bevorzugt beträgt der Anteil an Silber und Ruthenium im Bimetallpartikel 1 bis 20 Gew.-%, wie zum Beispiel 2 bis 18 Gew.-%, 3 bis 17 Gew.-%, oder 5 bis 15 Gew.-%. Alle Angaben in Gew.-% beziehen sich hier auf das Gesamtgewicht der Bimetallpartikel.

Bevorzugt ist in den Bimetallpartikeln auf dem Trägermaterial zunächst eine dünne Silber- oder Silberlegierungsschicht aufgetragen. Diese werden bevorzugt galvanisch aufgebracht oder abgeschieden. Andere Beschichtungsverfahren, wie PVD-, CVD-, Sputter-, Sol-, Gel- und Reduktionsverfahren, sind ebenfalls hierfür geeignete Plattierverfahren. Auf die Silberschicht wird dann eine Rutheniumschicht aufgetragen, wobei die Menge an Ruthenium im Verhältnis zur Menge der Silberschicht vorzugsweise geringgehalten wird, beispielsweise im Ag/Ru-Verhältnis von 1/0,001 bis 1/0,2 oder von 1/0,005 bis 1/0,1. Das Aufbringen der Rutheniumschicht wird hierbei bevorzugt so gesteuert, dass die silberhaltige Oberfläche durch durchgehende, vorzugsweise fein ausgebildete, freie Flächen, Öffnungen, Poren, Risse, Zwischenräume oder dergleichen in der Rutheniumschicht im Feuchtigkeitskontakt mit der Umgebung steht oder in einen Feuchtigkeitskontakt mit der Umgebung gelangen kann und dadurch einen Feuchtigkeitskontakt zwischen Silber und dem Ruthenium gewährleistet ist. Wenn die Silberoberfläche mit Ruthenium-Clustern besetzt wird, kann der katalytische Effekt des Silbers in vorteilhafter Weise verstärkt werden. Vorzugsweise wird Ruthenium in einer Dicke im Nanometer-Bereich aufgebracht, wobei sich eine Dicke von maximal etwa 500 nm, insbesondere etwa 50 nm und minimal etwa 5-10 nm als besonders geeignet herausgestellt hat.

Die Größe der Silber-Ruthenium Bimetallpartikel ist prinzipiell nicht begrenzt. Jedoch haben sich in Druckfarbenanwendungen Partikelgrößen von höchstens 5 µm (D90-Wert) als besonders geeignet herausgestellt, um ein einheitliches Aussehen der mit der Druckfarbe erzeugten Bedruckung zu gewährleisten. Ebenfalls neigen Partikel mit einem D90-Wert von über 5 µm, wenn Sie im Substrat oder in einer der weiteren Schichten verwendet werden, zu einer möglicherweise nachteiligen Vergrauung des Substrats bzw. der weiteren Schicht. Dies kann allerdings in manchen Anwendungen auch akzeptabel sein, beispielsweise wenn zusätzlich den Grauton übertünchende Farben im Substrat bzw. der weiteren Schicht vorhanden sind. Gleichzeitig sollten die Partikelgrößen bevorzugt 100 nm (D50-Wert) nicht unterschreiten, da sonst der gewünschte katalytische Effekt nicht ausgeprägt genug sein kann. Die Partikelgrößen der Bimetallpartikel bewegen sich somit bevorzugt im Bereich von 0,1 bis 5µm, bevorzugt von 0,2 µm bis 4 µm, wie beispielsweise von 0,3 bis 3 µm, von 0,5 bis 3 µm oder von 1 bis 3 µm, wobei die unteren Werte jeweils D50-Werte angeben und die oberen Werte jeweils D90-Werte angeben. Die D50 und D90-Werte geben in einer Partikelgrößenverteilung die Größe an, unterhalb der sich 50% (D50-Wert) bzw. 90% (D90-Wert) der Partikel der Partikelgrößenverteilung befinden. Die D50 und D90-Werte sind dem Fachmann bekannt und können von diesem ohne Schwierigkeiten bestimmt werden, beispielsweise unter Verwendung von entsprechenden Geräten der Firma Microtrac, Inc.

Die Oberflächenfläche der Silber-Ruthenium-Bimetallpartikel kann von 0,1 bis 1000 m²/g, beispielsweise von 0,5 bis 500 m²/g, von 1 bis 100 m²/g, von 2 bis 50 m²/g, von 5 bis 30 m²/g, oder von 10 bis 20 m²/g betragen.

Geeignete Silber-Ruthenium-Bimetallpartikel sind kommerziell erhältlich, beispielsweise unter den Handelsnamen AGXX oder AGXX-Hybrid von der Firma Heraeus GmbH.

Die zur Bedruckung des erfindungsgemäßen Wertdokuments verwendete Druckfarbe als solche ist nicht beschränkt, solange sie die oben beschriebenen Silber-Ruthenium-Bimetallpartikel enthält.

Somit kann prinzipiell jede für den Wertdokumentendruck geeignete Druckfarbe als Basis verwendet werden, und zur Herstellung einer für die vorliegende Erfindung geeigneten Druckfarbe in diese Basis Silber-Ruthenium-Bimetallpartikel eingebracht werden. Geeignete Druckfarben sind dem Fachmann bekannt und beispielsweise in der WO 2013178325 A2, der EP 2888112 B1, der DE 102012010534 A1, der WO 2013178325 A2, der EP 2888112 B1, der WO 2018197039 A1 und der EP 3660110 B1 beschrieben. Es versteht sich, dass die Druckfarbe bevorzugt oxidativ trocknend bzw. aushärtend sein sollte, damit der katalytische Effekt der Silber-Rutheniumparitkel vollständig zum Tragen kommt. Beispielsweise kann die Farbe noch bevorzugter eine oxidativ trocknende Offsetfarbe oder oxidativ trocknende Stichtiefdruckfarbe sein. Besonders bevorzugt sind Druckfarben, insbesondere oxidativ trocknende Offsetfarben oder oxidativ trocknende Stichtiefdruckfarben, auf Basis von pflanzlichen Ölen (z.B. Leinöl, Holzöl) oder Mineralölen, gelösten Kohlenwasserstoffharzen und/oder modifizierten Kolophoniumharzen, und/oder Alkydharzen, insbesondere hochmolekularen Alkydharzen.

Die Silber-Ruthenium-Bimetallpartikel können bei der Herstellung einer Druckfarbe direkt oder auch zu einem späteren Zeitpunkt in eine vorher hergestellte Druckfarbe eingebracht werden. Besonders im zweiten Fall ist jedoch durch den Anwender eine gründliche Durchmischung von Druckfarbe und Bimetallpartikeln sicherzustellen. Die Silber-Ruthenium-Bimetallpartikel sind in der Regel in einer Menge von 0,1 bis 10 Gew.-%, wie beispielsweise von 0,2 bis 8 Gew.-%, 0,3 bis 7 Gew.-%, von 0,5 bis 5 Gew.-%, von 0,7 bis 4 Gew.-%, 0,8 bis 3,5 Gew.-%, oder von 1 bis 3 Gew.-%, beispielsweise 2 Gew.-%, jeweils bezogen auf das Trockengewicht der bimetallhaltigen Druckfarbe, in der Druckfarbe enthalten.

Das Wertdokument kann weiterhin mindestens eine weitere Schicht umfassen, die beispielsweise auf der Bedruckung aufgebracht sein kann. Insbesondere ist bevorzugt, dass die mindestens eine weitere Schicht eine Topbeschichtung ist. Eine Topbeschichtung ist die äußerste Schicht eines Wertdokuments, d.h. die Schicht, die direkt mit der Umgebung in Kontakt kommt. Eine Topbeschichtung erfüllt in der Regel unter anderem eine Schutzfunktion gegen äußere Einflüsse, wie beispielsweise Feuchtigkeit, Fette, Öle, Lösungsmittel und Schmutz, aber auch gegen physikalische Einwirkungen. Eine Topbeschichtung ist bevorzugt auf beiden Seiten des Wertpapiers und üblicherweise vollflächig aufgetragen.

Prinzipiell kann die mindestens eine weitere Schicht aber auch jede andere im Wertdokumentendruck üblicherweise verwendete Schicht sein. Im Falle einer Topbeschichtung ist bevorzugt, dass sie eine kationisch oder radikalisch UV-härtende Schicht ist.

Gemäß einem zweiten Aspekt betrifft die vorliegende Erfindung ein Verfahren zur katalytisch beschleunigten Aushärtung einer Druckfarbe auf einem Wertdokument, umfassend die Schritte des Bereitstellens einer Druckfarbe, die Silber-Ruthenium-Bimetallpartikel enthält, und Drucken der Druckfarbe auf ein Wertdokumentensubstrat. Das Wertdokument sowie alle essenziellen und optionalen Bestandteile davon, wie beispielsweise das Substrat, die Druckfarbe und die Silber-Ruthenium-Bimetallpartikel, können dabei wie oben im Zusammenhang mit dem erfindungsgemäßem Wertdokument gemäß dem ersten Aspekt der vorliegenden Erfindung ausgestaltet sein. Das Drucken der Druckfarbe auf ein Wertdokumentensubstrat kann mit allen üblichen Druckverfahren erfolgen, beispielsweise Offsetdruck oder Stichtiefdruck.

Gemäß einem dritten Aspekt betrifft die vorliegende Erfindung die Verwendung von Silber-Ruthenium-Bimetallpartikeln zur Aushärtung von Druckfarben auf einem Wertdokument. Das Wertdokument sowie alle essenziellen und optionalen Bestandteile davon, wie beispielsweise das Substrat, die Druckfarbe und die Silber-Ruthenium-Bimetallpartikel, können dabei wie oben im Zusammenhang mit dem erfindungsgemäßem Wertdokument gemäß dem ersten Aspekt der vorliegenden Erfindung ausgestaltet sein.

## Patentansprüche

1. Wertdokument, umfassend
- ein Substrat mit optional zwei darauf gegenüberliegend aufgebrachten Schichten,
- mindestens eine Bedruckung aus mindestens einer Druckfarbe, und
- optional mindestens eine weitere Schicht, **dadurch gekennzeichnet, dass**
imindestens eine der mindestens einen Druckfarbe Silber-Ruthenium-Bimetallpartikel enthält.

2. Wertdokument gemäß Anspruch 1, wobei zusätzlich das Substrat und/oder, wenn vorhanden, mindestens eine der beiden gegenüberliegend aufgebrachten Schichten, und/oder, wenn vorhanden, mindestens eine der mindestens einen weiteren Schicht Silber-Ruthenium-Bimetallpartikel enthält.

3. Wertdokument gemäß Anspruch 1 oder 2, wobei die Silber-Ruthenium-Bimetallpartikel einen D90-Wert für die Partikelgröße von höchstens 5 µm aufweisen.

4. Wertdokument gemäß einem der Ansprüche 1-3, wobei das Substrat mit Polyvinylalkohol imprägniert ist.

5. Wertdokument gemäß einem der Ansprüche 1-4, wobei mindestens eine weitere Schicht vorhanden ist, und mindestens eine der mindestens einen weiteren Schicht eine kationisch oder radikalisch UV-härtende Topbeschichtung ist.

6. Wertdokument gemäß einem der Ansprüche 1-5, wobei das Wertdokument eine Banknote oder ein Ausweisdokument ist.

7. Verfahren zur katalytisch beschleunigten Aushärtung einer Druckfarbe auf einem Wertdokument, umfassend die Schritte des Bereitstellens einer Druckfarbe, die Silber-Ruthenium-Bimetallpartikel enthält, und Drucken der Druckfarbe auf ein Wertdokumentensubstrat.

8. Verfahren gemäß Anspruch 7, wobei die Druckfarbe eine oxidativ trocknende Farbe, bevorzugt eine oxidativ trocknende Offsetfarbe oder oxidativ trocknende Stichtiefdruckfarbe ist.

9. Verfahren gemäß Anspruch 7 oder 8, wobei die Druckfarbe durch Hydroxyradikale aushärtbar ist.

10. Verwendung von Silber-Ruthenium-Bimetallpartikeln zur Aushärtung von Druckfarben auf einem Wertdokument.

## Claims

1. Value document comprising
- a substrate with optionally two layers applied opposite each other thereon,
- at least one print from at least one printing ink, and
- optionally at least one further layer,
**characterized in that** at least one of the at least one printing ink contains silver-ruthenium bimetallic particles.

2. Value document according to claim 1, wherein in addition the substrate and/or, if present, at least one of the two layers applied opposite each other, and/or, if present, at least one of the at least one further layer contains silver-ruthenium bimetallic particles.

3. Value document according to claim 1 or 2, wherein the silver-ruthenium bimetallic particles have a D90 value for the particle size of at most 5 µm.

4. Value document according to one of claims 1-3, wherein the substrate is impregnated with polyvinyl alcohol.

5. Value document according to one of claims 1-4, wherein at least one further layer is present, and at least one of the at least one further layer is a cationic or radical UV-curing top coating.

6. Value document according to one of claims 1-5, wherein the valuable document is a banknote or an identity document.

7. Method for catalytically accelerated curing of a printing ink on a value document, comprising the steps of providing a printing ink containing silver-ruthenium bimetallic particles and printing the printing ink onto a value document substrate.

8. Method according to claim 7, wherein the printing ink is an oxidative drying ink, preferably an oxidative drying offset ink or oxidative drying intaglio ink.

9. Method according to claim 7 or 8, wherein the printing ink is curable by hydroxyl radicals.

10. Use of silver-ruthenium bimetallic particles for curing printing inks on a value document.

## Revendications

1. Document de valeur, comprenant
- un substrat, doté en option de deux couches appliquées en vis-à-vis sur celui-ci,
- au moins une impression en au moins une encre d'impression et
- en option, au moins une couche supplémentaire,
**caractérisé en ce qu'**au moins l'une des au moins une encre d'impression contient des particules bimétalliques d'argent-ruthénium.

2. Document de valeur selon la revendication 1, additionnellement, le substrat et / ou si elles sont présentes, au moins l'une des deux couches appliquées en vis-à-vis, et / ou si présente, au moins une des au moins une couche supplémentaire contient des particules bimétalliques d'argent-ruthénium.

3. Document de valeur selon la revendication 1 ou 2, les particules bimétalliques d'argent-ruthénium faisant preuve d'une valeur D90 pour la taille des particules d'au maximum 5 µm.

4. Document de valeur selon l'une quelconque des revendications 1 à 3, le substrat étant imprégné d'alcool polyvinylique.

5. Document de valeur selon l'une quelconque des revendications 1 à 4, au moins une couche supplémentaire étant présente et au moins l'un des au moins une couche supplémentaire étant un revêtement supérieur à durcissement cationique ou par radicaux aux UV.

6. Document de valeur selon l'une quelconque des revendications 1 à 5, le document de valeur étant un billet de banque ou un papier d'identité.

7. Procédé, dédié au durcissement catalytique accéléré d'une encre d'impression sur un document de valeur, comprenant les étapes consistant à mettre à disposition une encre d'impression, qui contient des particules bimétalliques d'argent-ruthénium et imprimer l'encre d'impression sur un substrat de document de valeur.

8. Procédé selon la revendication 7, l'encre d'impression étant une encre séchant par oxydation, de préférence une encre offset séchant par oxydation ou une encre pour héliogravure séchant par oxydation.

9. Procédé selon la revendication 7 ou 8, l'encre d'impression étant durcissable par des radicaux hydroxy.

10. Utilisation de particules bimétalliques d'argent-ruthénium pour faire durcir des encres d'impression sur un document de valeur.
